# EUROPÄISCHE PATENTSCHRIFT

(11) **EP 2 601 066 B1**
(45) Veröffentlichungstag und Bekanntmachung des Hinweises auf die Patenterteilung: **22.06.2016**
(21) Anmeldenummer: 11740840.1
(22) Anmeldetag: 27.07.2011
(51) Int. Cl.: B60K 17/36

(54) **KRAFTFAHRZEUGANTRIEBSSTRANGVORRICHTUNG**
MOTOR VEHICLE DRIVE TRAIN DEVICE
ENSEMBLE DE TRANSMISSION D'UN VÉHICULE AUTOMOBILE

(30) Priorität: 07.08.2010 DE 102010034224
(43) Veröffentlichungstag der Anmeldung: 12.06.2013
(73) Patentinhaber: Daimler AG, 70327 Stuttgart (DE)
(72) Erfinder: KRAJEWSKI, Christian, 73760 Ostfildern-Ruit (DE)
(74) Vertreter: JENSEN & SON
(86) Internationale Anmeldenummer: PCT/EP2011/003766
(87) Internationale Veröffentlichungsnummer: WO 2012/019708

(56) Entgegenhaltungen:
- DE-A1- 4 039 392
- US-A- 5 894 904

## Beschreibung

Die Erfindung betrifft eine Kraftfahrzeugantriebsstrangvorrichtung nach dem Oberbegriff des Anspruchs 1.

Aus der DE 10 2006 045 007 A1 ist bereits eine Kraftfahrzeugantriebsstrangvorrichtung mit wenigstens einem Hauptantriebsstrang zum Antrieb einer Haupt-Antriebsachse, mit wenigstens einem über den Hauptantriebsstrang angetriebenen Hilfsantriebsstrang und mit einer über den Hilfsantriebsstrang antreibbaren Neben-Antriebsachse bekannt.

Die gattungsgemäße DE 40 39 392 A1 offenbart einen Kraftfahrzeugantriebsstrang mit einem Hauptantriebsstrang und einem Hilfsantriebsstrang, wobei der Hilfsantriebsstrang mittels einer Trennkupplung an den Hauptantriebsstrang angekoppelt bzw. von dem Hauptantriebsstrang entkoppelt werden kann, und wobei eine Nebenantriebsachse querdifferentialfrei an den Hilfsantriebsstrang angebunden ist. Die Nebenantriebsachse weist dabei eine erste und eine zweite Lamellenkupplung auf.

Die US 5 894 904 A offenbart einen Kraftfahrzeugantriebsstrang, wobei ein Hilfsantriebsstrang differentialfrei an einen Hauptantriebsstrang angebunden ist. Eine Nebenantriebsachse des Hilfsantriebsstranges weist dabei eine erste und eine zweite Lamellenkupplung auf.

Der Erfindung liegt insbesondere die Aufgabe zugrunde, eine konstruktiv einfache und dadurch insbesondere kostengünstige Kraftfahrzeugantriebsstrangvorrichtung bereitzustellen. Sie wird gemäß der Erfindung durch die Merkmale des Anspruchs 1 gelöst. Weitere Ausgestaltungen ergeben sich aus den Unteransprüchen.

Die Erfindung geht aus von einer Kraftfahrzeugantriebsstrangvorrichtung mit wenigstens einem Hauptantriebsstrang zum Antrieb einer Haupt-Antriebsachse, mit wenigstens einem über den Hauptantriebsstrang angetriebenen Hilfsantriebsstrang und mit einer über den Hilfsantriebsstrang antreibbaren Neben-Antriebsachse.

Es wird vorgeschlagen, dass die Neben-Antriebsachse zumindest querdifferentialfrei an den Hilfsantriebsstrang angebunden ist. Dadurch kann ein Differential entfallen, wodurch insbesondere eine Bauteilezahl klein gehalten werden kann. Dadurch können insbesondere Baukosten gesenkt werden, wodurch insbesondere eine kostengünstige Kraftfahrzeugantriebsstrangvorrichtung bereitgestellt werden kann. Unter einer "Antriebsachse" soll dabei insbesondere eine Anordnung von koaxial zueinander angeordneten Bauteilen verstanden werden, die für einen Antrieb eines Kraftfahrzeugs vorgesehen sind. Die Antriebsachse umfasst dabei zur Übertragung eines Antriebsmoments insbesondere zwei Antriebsräder und zwei Radantriebswellen, die jeweils drehfest mit einem der Antriebsräder verbunden sind. Dabei soll unter "zumindest querdifferentialfrei" insbesondere verstanden werden, dass zumindest auf ein Querdifferential für einen Drehzahlausgleich zwischen den Antriebsrädern der Antriebsachse verzichtet wird, d.h., dass die Antriebsräder der Neben-Antriebsachse lediglich drehzahlgleich an den Hilfsantriebsstrang angebunden und/oder anbindbar sind. Vorteilhafterweise wird auch auf ein Längsdifferential für einen Drehzahlausgleich zwischen dem Hauptantriebsstrang und dem Hilfsantriebsstrang verzichtet.

Es wird weiter vorgeschlagen, dass die Kraftfahrzeugantriebsstrangvorrichtung ein Umsetzgetriebe aufweist, das dazu vorgesehen ist, zwei Radantriebswellen drehzahlgleich mit einer Hilfsantriebswelle zu verbinden. Dadurch kann die Neben-Antriebsachse konstruktiv besonders einfach an den Hilfsantriebsstrang angebunden werden. Unter "drehzahlgleich verbinden" soll dabei insbesondere verstanden werden, dass eine Drehzahl der Radantriebswellen stets gleich ist und die Radantriebswellen insbesondere ein festes Übersetzungsverhältnis zu einer Hilfsantriebswelle aufweisen.

Des Weiteren wird vorgeschlagen, dass die Nebenantriebsachse eine erste Kupplungseinheit und eine zweite Kupplungseinheit aufweist, die dazu vorgesehen sind, die zwei Radantriebsantriebswellen einzeln mit der Hilfsantriebswelle zu verbinden. Dadurch kann eine Differenzialfunktionalität für die zweite Antriebsachse konstruktiv einfach realisiert werden. Unter einer "Differentialfunktionalität" soll dabei insbesondere eine Ausgleichsfunktionalität verstanden werden, die dazu vorgesehen ist, eine Drehzahldifferenz zwischen den zwei Antriebsrädern bereitzustellen. Unter "einer Kupplungseinheit" soll insbesondere eine Einheit verstanden werden, die dazu vorgesehen ist, zwei drehbar zueinander angeordnete Wellen drehfest miteinander zu verbinden.

Ferner wird vorgeschlagen, dass die Kraftfahrzeugantriebsstrangvorrichtung eine Steuer- und/oder Regeleinheit aufweist, die dazu vorgesehen ist, einen Normal-Betriebsmodus, einen Standby-Betriebsmodus und einen Hilfs-Betriebsmodus zu schalten. Dadurch kann die Kraftfahrzeugantriebsstrangvorrichtung einfach auf den für eine Fahrsituation günstigsten Betriebsmodus eingestellt werden. Unter einem "Normal-Betriebsmodus" soll dabei insbesondere ein Betriebsmodus verstanden werden, in dem ein Antriebsmoment lediglich über die Antriebsräder der Hauptantriebsachse übertragen wird. Unter einem "Hilfs-Betriebsmodus" soll insbesondere ein Betriebmodus verstanden werden, in dem ein Antriebsmoment über die Antriebsräder der Hauptantriebsachse und der Nebenantriebsachse übertragen wird. Unter einem "Stand-by-Betriebsmodus" soll insbesondere ein Betriebsmodus verstanden werden, der von den Normal-Betriebsmodus und dem Hilfs-Betriebsmodus verschieden ist und der insbesondere zur Zuschaltung des Hilfsbetriebsmodus vorgesehen ist. Unter einer "Steuer- und/oder Regeleinheit" soll insbesondere eine Einheit mit zumindest einem Steuergerät verstanden werden. Unter einem Steuergerät soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter "vorgesehen" soll insbesondere speziell programmiert, ausgestattet und/oder ausgelegt verstanden werden.

Weiter wird vorgeschlagen, dass die Steuer- und/oder Regeleinheit dazu vorgesehen ist, zum Schalten des Stand-by-Betriebsmodus eine der beiden Kupplungseinheiten zu öffnen. Dadurch kann die Differentialfunktionalität einfach geschaltet werden.

Es wird weiter vorgeschlagen, dass die Steuer- und/oder Regeleinheit dazu vorgesehen ist, zum Schalten des Stand-by-Betriebsmodus eine der beiden Kupplungseinheiten zu schließen. Dadurch kann die Differentialfunktionalität besonders vorteilhaft geschaltet werden.

In einer weiteren Ausgestaltung wird vorgeschlagen, dass die Steuer- und/oder Regeleinheit dazu vorgesehen ist, zum Schalten des Hilfs-Betriebsmodus beide Kupplungseinheiten zu schließen. Dadurch kann ein Antrieb besonders einfach über zwei Antriebsräder erfolgen.

Des Weiteren wird vorgeschlagen, dass die Steuer- und/oder Regeleinheit dazu vorgesehen ist, in Abhängigkeit von einem Schlupf der Haupt-Antriebsache den Hilfs-Betriebsmodus zu schalten. Dadurch kann einem Schlupf der Haupt-Antriebsachse vorteilhaft und einfach entgegengewirkt werden. Unter einem "Schlupf der Haupt-Antriebsachse" soll in diesem Zusammenhang insbesondere ein Durchrutschen von wenigstens einem der Antriebsräder der Haupt-Antriebsachse verstanden werden. Die Steuer- und/oder Regeleinheit kann das Durchrutschen der Haupt-Antriebsachse insbesondere anhand einer Drehzahldifferenz zwischen der Haupt-Antriebsachse und einer antriebslosen Neben-Antriebsachse ermitteln.

Es wird weiter vorgeschlagen, dass die Steuer- und/oder Regeleinheit dazu vorgesehen ist, unterhalb einer definierten Grenzgeschwindigkeit den Stand-by-Betriebsmodus oder den Hilfs-Betriebsmodus zu schalten. Dadurch kann die Kraftfahrzeugantriebsstrangvorrichtung besonders einfach auf eine Ausführung des Hilfs-Betriebsmodus vorbereitet werden, wodurch der Hilfs-Betriebsmodus insbesondere schnell ausgeführt werden kann. Unter einer "Grenzgeschwindigkeit" soll dabei insbesondere eine definierte Geschwindigkeit verstanden werden, mit dem sich das Kraftfahrzeug fortbewegt. Die Grenzgeschwindigkeit beträgt dabei vorzugsweise höchstens 50 km/h, wobei höchstens 40 km/h vorteilhaft und höchstens 30 km/h besonders vorteilhaft sind.

Ferner wird vorgeschlagen, dass die Steuer- und/oder Regeleinheit dazu vorgesehen ist, zum Schalten des Normal-Betriebsmodus beide Kupplungseinheiten zu öffnen. Dadurch kann in dem Normal-Betriebsmodus ein besonders vorteilhafter, insbesondere weniger verlustbehafteter Antrieb des Kraftfahrzeugs erfolgen.

Weiter wird vorgeschlagen, dass die Steuer- und/oder Regeleinheit dazu vorgesehen ist, oberhalb der Grenzgeschwindigkeit den Normal-Betriebsmodus zu schalten. Dadurch kann insbesondere bei höheren Geschwindigkeiten ein besonders vorteilhafter Antrieb erfolgen.

Weiter wird vorgeschlagen, dass zumindest eine der beiden Kupplungseinheiten lastabschaltbar ist. Dadurch kann eine der Kupplungseinheiten vorteilhaft unter Last geöffnet werden, wodurch insbesondere vorteilhaft ein irregulärer Betriebszustand verhindert und/oder aufgehoben werden kann. Unter "lastabschaltbar" soll dabei insbesondere Verstanden werden, dass die Kupplungseinheit geöffnet werden kann, während sie ein Moment überträgt. Vorzugsweise ist die Kupplungseinheit lediglich lastabschaltbar, d.h. lediglich lastfrei zuschattbar und lastabschaltbar.

Zudem wird erfindungsgemäß ein Verfahren für eine Kraftfahrzeugantriebsstrangvorrichtung, insbesondere für eine Kraftfahrzeugantriebsstrangvorrichtung mit wenigstens einem Hauptantriebsstrang, der eine Haupt-Antriebsachse antreibt, mit wenigstens einem über den Hauptantriebsstrang angetriebenen Hilfsantriebsstrang, der eine Neben-Antriebsachse antreibt, vorgeschlagen, wobei die Neben-Antriebsachse querdifferentialfrei von dem Hilfsantriebsstrang angetrieben wird.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

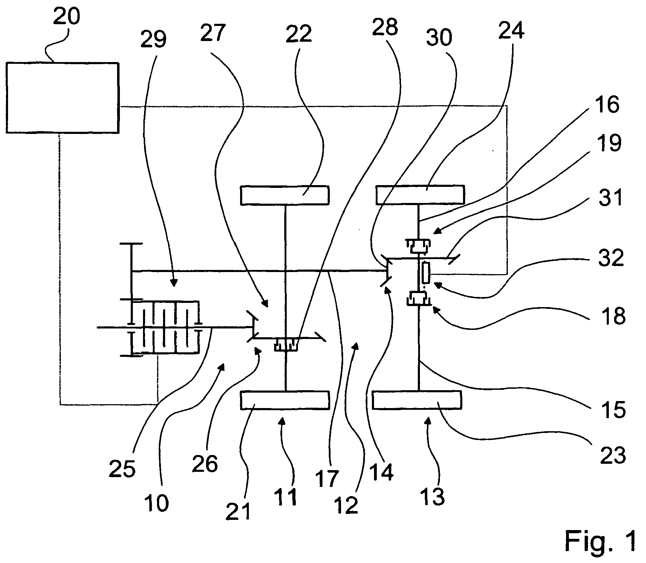

Die Figur 1 zeigt schematisch einen Kraftfahrzeugantriebsstrang mit einer erfindungsgemäßen Kraftfahrzeugantriebsstrangvorrichtung in einem nicht näher dargestellten Kraftfahrzeug. Der Kraftfahrzeugantriebsstrang ist als ein Lastkraftfahrzeugantriebsstrang ausgebildet. Der Kraftfahrzeugantriebsstrang ist aufgeteilt in einen Hauptantriebsstrang 10 und einen Hilfsantriebsstrang 12. Der Kraftfahrzeugantriebsstrang weist eine über den Hauptantriebsstrang 10 permanent angetriebene Haupt-Antriebsachse 11 und eine über den Hilfsantriebsstrang 12 antreibbare Neben-Antriebsachse 13 auf. Die Neben-Antriebsachse 13 ist querdifferentialfrei an den Hilfsantriebsstrang 12 angebunden. Der Hauptantriebsstrang 10 umfasst zwei Antriebsräder 21, 22, die mittels der Haupt-Antriebsachse 11 antreibbar sind. Der Hilfsantriebsstrang 12 weist ein erstes Antriebsrad 23 und ein zweites Antriebsrad 24 auf, die mittels der Neben-Antriebsachse 13 antreibbar sind. Mittels der Antriebsräder 21, 22, 23, 24 ist das Kraftfahrzeug antreibbar.

Der Hauptantriebsstrang 10 treibt permanent die Haupt-Antriebsachse 11 an. Der Hauptantriebsstrang 10 weist eine Antriebswelle 25, ein Antriebszahnrad 26, einen Achsantrieb 27 und eine Differentialsperre 28 auf. Die Antriebswelle 25 leitet ein Moment in den Kraftfahrzeugantriebsstrang ein. Das Antriebszahnrad 26 wird über die Antriebswelle 25 angetrieben. Das Antriebszahnrad 26 treibt den Achsantrieb 27 der Haupt-Antriebsachse 11 an. Der Achsantrieb 27 umfasst ein Differential. Die Antriebswelle 25 ist stets mit dem Achsantrieb 27 der Haupt-Antriebsachse 11 gekoppelt. Der Achsantrieb 27 der Haupt-Antriebsachse 11 treibt die Antriebsräder 21, 22 der Haupt-Antriebsachse 11 an. Die Differentialsperre 28 sperrt bedarfsweise das Differential, indem sie die Antriebsräder 21, 22 drehfest miteinander verbindet. Die Antriebswelle 25 ist über das Antriebszahnrad 26 stets mit der Haupt-Antriebsachse 11 gekoppelt.

Zur Anbindung der koppelbaren Neben-Antriebsachse 13 an den Hauptantriebsstrang bzw. an die permanent angetriebene Haupt-Antriebsachse 11 weist der Hilfsantriebsstrang 12 eine Kupplungsvorrichtung 29 auf. Die Kupplungsvorrichtung 29 bindet den Hilfsantriebsstrang 12 an den Hauptantriebsstrang 10 an. Die Kupplungsvorrichtung 29 ist als eine Lamellenkupplung ausgebildet. Die Kupplungsvorrichtung 29 weist zur Herstellung einer drehfesten Verbindung mehrere Lamellen auf, die jeweils einen Reibbelag aufweisen. Zur Herstellung einer reibschlüssigen Verbindung werden die Lamellen der Kupplungsvorrichtung 29 aneinander gedrückt und die Reibbeläge der Lamellen stehen in Reibkontakt.
Der Hilfsantriebsstrang 12 weist eine Hilfsantriebswelle 17, eine erste Radantriebswelle 15 und eine zweite Radantriebswelle 16 auf. Zur starren Verbindung der Neben-Antriebsachse 13 an den Hauptantriebsstrang 10 weist die Kraftfahrzeugantriebsstrangvorrichtung ein Umsetzgetriebe 14 auf. Das Umsetzgetriebe 14 verbindet die Hilfsantriebswelle 17 drehzahlgleich mit den Radantriebswellen 15, 16. Das Umsetzgetriebe 14 umfasst zwei Zahnräder 30, 31. Das erste Zahnrad 30 ist drehfest mit der Hilfsantriebswelle 17 verbunden und ist als ein Kegelrad ausgebildet. Das zweite Zahnrad 31 ist drehfest mit der Neben-Antriebsachse 13 verbunden und als ein Kegelrad ausgebildet. Das erste Zahnrad 30 und das zweite Zahnrad 31 kämmen miteinander und können so ein Moment von der Hilfsantriebswelle 17 in die Neben-Antriebsachse 13 übertragen.

Zur Übernahme einer Differenzialfunktionalität weist die Neben-Antriebsachse 13 eine erste Kupplungseinheit 18 und eine zweite Kupplungseinheit 19 auf. Die Kupplungseinheiten 18, 19 sind auf der Neben-Antriebsachse 13 im Kraftfluss hinter dem Umsetzgetriebe 14 angeordnet. Die Kupplungseinheit 18 ist in dem Kraftfluss zwischen dem Umsetzgetriebe 14 und dem ersten Antriebsrad 23 angeordnet. Die Kupplungseinheit 19 ist in dem Kraftfluss zwischen dem Umsetzgetriebe 14 und dem zweiten Antriebsrad 24 angeordnet. Die Kupplungseinheiten 18, 19 sind als formschlüssige Klauenkupplungen ausgebildet.

Mittels der Kupplungseinheit 18 ist die Radantriebswelle 15 drehfest mit der Hilfsantriebswelle 17 verbindbar. Die Kupplungseinheit 18 weist zwei Betriebszustände auf. In einem ersten Betriebszustand ist die Kupplungseinheit 18 geöffnet. In dem geöffneten Zustand ist die Radantriebswelle 15 von der Hilfsantriebswelle 17 getrennt. Die Kupplungseinheit 18 ist als eine lastabschaltbare Kupplungseinheit ausgebildet. Dazu weist die Kupplungseinheit 18, die als eine Klauenkupplung ausgebildet ist, beispielsweise eine Klaue mit einem positiven Winkel auf.

Mittels der Kupplungseinheit 19 ist die Radantriebswelle16 drehfest mit der Hilfsantriebswelle 17 verbindbar. Die Kupplungseinheit 19 weist zwei Betriebszustände auf. In einem ersten Betriebszustand ist die Kupplungseinheit 19 geöffnet. In dem geöffneten Zustand ist die Radantriebswelle16 von der Hilfsantriebswelle 17 getrennt.

Zur Betätigung der Kupplungseinheiten 18, 19 weist die Kraftfahrzeugantriebsstrangvorrichtung eine Schalteinheit 32 auf. Die Schalteinheit 32 weist einen 3-Stellungs-Zylinder auf. Die Schalteinheit 32 weist 3 Schaltstellungen auf. In einer ersten Schaltstellung sind die Kupplungseinheit 18 und die Kupplungseinheit 19 geöffnet. In einer zweiten Schaltstellung ist die Kupplungseinheit 18 geöffnet und die Kupplungseinheit 19 geschlossen. In einer dritten Schaltstellung sind die Kupplungseinheit 18 und die Kupplungseinheit 19 geschlossen. Die Schalteinheit 32 weist eine Grundposition auf, in der sie sich in unbetätigtem Zustand befindet. Die Grundposition ist als die erste Schaltstellung ausgebildet. Grundsätzlich kann die Schalteinheit 32 auch auf eine andere, dem Fachmann als sinnvoll erscheinende Weise, beispielsweise mittels zwei 2-Stellungs-Zylindern, aufgebaut sein.

Zur automatischen oder automatisierten Betätigung der Kupplungsvorrichtung 29, der ersten Kupplungseinheit 18 und der zweiten Kupplungseinheit 19 des Kraftfahrzeugantriebsstrangs weist die Kraftfahrzeugantriebsstrangvorrichtung eine Steuer- und Regeleinheit 20 auf. Die Schalteinheit 32 ist mittels der Steuer- und Regeleinheit 20 gesteuert. Die Steuer- und Regeleinheit 20 ist dazu vorgesehen, das Zuschalten des Hilfsantriebsstrangs 12 zu regeln. Die Steuer- und Regeleinheit 20 weist drei Betriebsmodi auf. Die Steuer- und Regeleinheit 20 weist einen Normal-Betriebsmodus, einen Stand-by-Betriebsmodus und einen Hilfs-Betriebsmodus auf und ist dazu vorgesehen, einen der Betriebsmodi auszuführen.

In dem Normal-Betriebsmodus ist die Kupplungsvorrichtung 29 geöffnet. Es wird kein Moment an den Hilfsantriebsstrang 12 übertragen. Für den Normal-Betriebsmodus schaltet die Steuer- und Regeleinheit 20 die Schalteinheit 32 in die erste Schaltstellung. Die Kupplungseinheiten 18, 19 der Neben-Antriebsachse 13 sind geöffnet, wodurch die Antriebsräder 23, 24 frei drehen können. Die Steuer- und Regeleinheit 20 ist dazu vorgesehen, den Normal-Betriebsmodus ab einer Grenzgeschwindigkeit von 30 km/h auszuführen.

In dem Stand-by-Betriebsmodus ist die Steuer- und Regeleinheit 20 ist dazu vorgesehen, eine der beiden Kupplungseinheiten 18, 19 zu schließen. Dazu schaltet die Steuer- und Regeleinheit 20 in dem Stand-by-Betriebsmodus die Schalteinheit 32 in die zweite Schaltstellung. In dem Stand-by-Betriebsmodus ist die Kupplungsvorrichtung 29 geöffnet. Es kann kein Moment von der Antriebswelle 25 an den Hilfsantriebsstrang 12 übertragen werden. Die Kupplungseinheit 18 ist geöffnet. Es kann kein Moment von der Hilfsantriebswelle 17 an die Radantriebswelle 15 übertragen werden. Die Kupplungseinheit 19 ist geschlossen und verbindet die Hilfsantriebswelle 17 drehfest mit der Radantriebswelle 16. Die Steuer- und Regeleinheit 20 ist dazu vorgesehen, den Stand-by-Betriebsmodus bei einer Grenzgeschwindigkeit unter 30 km/h auszulösen.

In dem Hilfs-Betriebsmodus ist die Kupplungsvorrichtung 29 geschlossen. In dem Hilfs-Betriebsmodus ist die Steuer- und Regeleinheit 20 dazu vorgesehen, beide Kupplungseinheiten 18, 19 zu schließen. Dazu schaltet die Steuer- und Regeleinheit 20 die Schalteinheit 32 in dem Hilfs-Betriebsmodus in die dritte Schaltstellung. Die Steuer- und Regeleinheit 20 ist dazu vorgesehen, den Hilfs-Betriebsmodus bei einer Geschwindigkeit unter 30 km/h und einem erkannten Schlupf der Haupt-Antriebsachse 11, was einem Durchdrehen von zumindest einem der Antriebsräder 21, 22 entspricht, zu schalten.

Die Steuer- und Regeleinheit 20 sensiert über eine nicht näher dargestellte Sensorik ständig eine Geschwindigkeit des Kraftfahrzeugs. Erkennt die Steuer- und Regeleinheit 20, dass die Geschwindigkeit unterhalb der Grenzgeschwindigkeit liegt schaltet sie in den Stand-by-Betriebsmodus. Dazu schaltet sie die Schalteinheit 32 in die zweite Schaltstellung und schließt dadurch die Kupplungseinheit 19. Die Radantriebswelle 16 ist mit der Hilfsantriebswelle 17 verbunden. Die Hilfsantriebswelle 17 wird dadurch beschleunigt und weist eine gleiche Drehzahl auf wie das Antriebsrad 24. Das Antriebsrad 23 ist von der Hilfsantriebswelle 17 getrennt. Dadurch kann eine Drehzahl des Antriebsrads 24 unterschiedlich zu einer Drehzahl des Antriebsrads 23 sein. Die Differenzialfunktionalität ist gegeben.

Erkennt die Steuer- und Regeleinheit 20 während des Stand-by-Betriebsmodus, also bei einer Geschwindigkeit des Kraftfahrzeugs unter der Grenzgeschwindigkeit, einen Schlupf der Haupt-Antriebsachse 11, schaltet die Steuer- und Regeleinheit 20 den Hilfs-Betriebsmodus. Dazu schaltet sie die Schalteinheit 32 in die dritte Schaltstellung und schließt dadurch die Kupplungseinheit 18. Die Kupplungseinheit 19 bleibt geschlossen. Die Antriebsräder 23, 24 sind mittels der Kupplungseinheiten 18, 19 starr miteinander verbunden. Die Steuer- und Regeleinheit 20 schließt die Kupplungsvorrichtung 29 und verbindet damit den Hilfsantriebsstrang 12 mit der Antriebswelle 25. Dadurch sind die Antriebsräder 23, 24 ebenfalls angetrieben und entlasten somit die Antriebsräder 21, 22, die permanent mit der Antriebswelle 25 verbunden sind.

Erkennt die Steuer- und Regeleinheit 20, dass die Geschwindigkeit des Fahrzeugs größer ist als die Grenzgeschwindigkeit, schaltet die Steuer- und Regeleinheit 20 von dem Hilfs-Betriebsmodus in den Normal-Betriebsmodus. Dazu schaltet die Steuer- und Regeleinheit 20 die Schalteinheit 32 wieder in die Neutralstellung. Beide Kupplungseinheiten 18, 19 werden geöffnet. Grundsätzlich kann die Steuer- und Regeleinheit 20 auch andere oder weitere Abschaltparameter zum Abschalten des Hilfs-Betriebsmodus auswerten. Beispielsweise ist es denkbar, dass die Steuer- und Regeleinheit den Hilfs-Betriebsmodus abschaltet, wenn für eine definierte Zeitspanne kein Schlupf der Haupt-Antriebsachse 11 mehr auftritt.

## Patentansprüche

1. Kraftfahrzeugantriebsstrangvorrichtung mit wenigstens einem Hauptantriebsstrang (10) zum Antrieb einer Haupt-Antriebsachse (11), mit wenigstens einem über den Hauptantriebsstrang (10) angetriebenen Hilfsantriebsstrang (12) und mit einer über den Hilfsantriebsstrang (12) antreibbaren Neben-Antriebsachse (13), wobei die Neben-Antriebsachse (13) querdifferentialfrei an den Hilfsantriebsstrang (12) angebunden ist,
**dadurch gekennzeichnet, dass**
der Hilfsantriebsstrang (12) über eine Lamellenkupplung (29) an den Hauptantriebsstrang (10) angebunden ist und die Neben-Antriebsachse (13) zur Übernahme einer Differentialfunktionalität eine erste und eine zweite Klauenkupplung (18,19) aufweist.

2. Kraftfahrzeugantriebsstrangvorrichtung nach Anspruch 1,
**gekennzeichnet durch**
ein Umsetzgetriebe (14), das dazu vorgesehen ist, zwei Radantnebswellen (15, 16) drehzahlgleich mit einer Hilfsantriebswelle (17) zu verbinden.

3. Kraftfahrzeugantriebsstrangvorrichtung nach Anspruch 2,
**dadurch gekennzeichnet, dass**
die Neben-Antriebsachse (13) eine erste Kupplungseinheit (18) und eine zweite Kupplungseinheit (19) aufweist, die dazu vorgesehen sind, die zwei Radantriebswellen (15, 16) einzeln mit der Hilfsantriebswelle (17) zu verbinden.

4. Kraftfahrzeugantriebsstrangvorrichtung nach einem der vorhergehenden Ansprüche,
**gekennzeichnet durch**
eine Steuer- und/oder Regeleinheit (20), die dazu vorgesehen ist, einen Normal-Betriebsmodus, einen Standby-Betriebsmodus und einen Hilfs-Betriebsmodus zu schalten.

5. Kraftfahrzeugantriebsstrangvorrichtung nach den Ansprüchen 3 und 4,
**dadurch gekennzeichnet, dass**
die Steuer- und/oder Regeleinheit (20) dazu vorgesehen ist, zum Schalten des Stand-by-Betriebsmodus eine der beiden Kupplungseinheiten (18, 19) zu öffnen.

6. Kraftfahrzeugantriebsstrangvorrichtung zumindest nach den Ansprüchen 3 und 4, **dadurch gekennzeichnet, dass**
die Steuer- und/oder Regeleinheit (20) dazu vorgesehen ist, zum Schalten des Stand-by-Betriebsmodus eine der beiden Kupplungseinheiten (18, 19) zu schließen.

7. Kraftfahrzeugantriebsstrangvorrichtung zumindest nach den Ansprüchen 3 und 4, **dadurch gekennzeichnet, dass**
die Steuer- und/oder Regeleinheit (20) dazu vorgesehen ist, zum Schalten des Hilfs-Betriebsmodus beide Kupplungseinheiten (18, 19) zu schließen.

8. Kraftfahrzeugantriebsstrangvorrichtung zumindest nach Anspruch 4,
**dadurch gekennzeichnet, dass**
die Steuer- und/oder Regeleinheit (20) dazu vorgesehen ist, in Abhängigkeit von einem Schlupf der Haupt-Antriebsache (11) den Hilfs-Betriebsmodus zu schalten.

9. Kraftfahrzeugantriebsstrangvorrichtung zumindest nach Anspruch 4,
**dadurch gekennzeichnet, dass**
die Steuer- und/oder Regeleinheit (20) dazu vorgesehen ist, unterhalb einer definierten Grenzgeschwindigkeit den Stand-by Betriebsmodus oder den Hilfs-Betriebsmodus zu schalten.

10. Kraftfahrzeugantriebsstrangvorrichtung zumindest nach den Ansprüchen 3 und 4, **dadurch gekennzeichnet, dass**
die Steuer- und/oder Regeleinheit (20) dazu vorgesehen ist, zum Schalten des Normal-Betriebsmodus beide Kupplungseinheiten (18, 19) zu öffnen.

11. Kraftfahrzeugantriebsstrangvorrichtung zumindest nach Anspruch 4,
**dadurch gekennzeichnet, dass**
die Steuer- und/oder Regeleinheit (20) dazu vorgesehen ist, oberhalb der Grenzgeschwindigkeit den Normal-Betriebsmodus zu schalten.

12. Kraftfahrzeugantriebsstrangvorrichtung zumindest nach den Ansprüchen 3 und 4, **dadurch gekennzeichnet, dass**
zumindest eine der beiden Kupplungseinheiten (18, 19) lastabschaltbar ist.

13. Verfahren für eine Kraftfahrzeugantriebsstrangvorrichtung, insbesondere für eine Kraftfahrzeugantriebsstrangvorrichtung nach einem der vorhergehenden Ansprüche, mit wenigstens einem Hauptantriebsstrang (10), der eine Haupt-Antriebsachse (11) antreibt, mit wenigstens einem über den Hauptantriebsstrang (10) angetriebenen Hilfsantriebsstrang (12), der eine Neben-Antriebsachse (13) antreibt, wobei die Neben-Antriebsachse (13) querdifferentialfrei von dem Hilfsantriebsstrang (12) angetrieben wird,
**dadurch gekennzeichnet, dass**
der Hilfsantriebsstrang (12) über eine Lamellenkupplung (29) an den Hauptantriebsstrang (10) angebunden ist und die Neben-Antriebsachse (13) zur Übernahme einer Differentialfunktionalität eine erste und eine zweite Klauenkupplung (18,19) aufweist, wobei zum Schalten eines Stand-by-Betriebsmodus eine der beiden Kupplungseinheiten (18) geöffnet und eine der beiden Klauenkupplungen (19) geschlossen wird, wobei ein Hilfs-Betriebsmodus geschaltet wird, indem beide Klauenkupplungen (18, 19) geschlossen werden und die Lamellenkupplung (29) geschlossen wird.

14. Verfahren nach Anspruch 13,
**dadurch gekennzeichnet, dass**
eine erste Kupplungseinheit (18) und eine zweite Kupplungseinheit (19) zwei Radantriebswellen (15, 16) einzeln mit einer Hilfsantriebswelle (17) verbinden.

## Claims

1. Motor vehicle drive train device, comprising at least one main drive train (10) for driving a main drive axle (11), at least one auxiliary drive train (12) driven via the main drive train (10) and a secondary drive axle (13), which can be driven via the auxiliary drive train (12), the secondary drive axle (13) being joined to the auxiliary drive train (12) without a transverse differential,
**characterised in that**
the auxiliary drive train (12) is joined to the main drive train (10) via a multi-plate clutch (29) and the secondary drive axle (13) comprises a first and a second dog clutch (18, 19) for adopting a differential functionality.

2. Motor vehicle drive train device according to claim 1,
**characterised by**
a conversion gearbox (14) provided for connecting two wheel drive shafts (15, 16) to an auxiliary drive shaft (17) at the same rotational speed.

3. Motor vehicle drive train device according to claim 2,
**characterised in that**
the secondary drive axle (13) comprises a first clutch unit (18) and a second clutch unit (19) provided for connecting the two wheel drive shafts (15, 16) individually to the auxiliary drive shaft (17).

4. Motor vehicle drive train device according to any of the preceding claims,
**characterised by**
an open- and/or closed-loop control unit (20) provided for selecting a normal mode, a standby mode and an auxiliary mode.

5. Motor vehicle drive train device according to claims 3 and 4,
**characterised in that**
the open- and/or closed-loop control unit (20) is provided for opening one of the two clutch units (18, 19) to select the standby mode.

6. Motor vehicle drive train device according to at least claims 3 and 4,
**characterised in that**
the open- and/or closed-loop control unit (20) is provided for closing one of the two clutch units (18, 19) to select the standby mode.

7. Motor vehicle drive train device according to at least claims 3 and 4,
**characterised in that**
the open- and/or closed-loop control unit (20) is provided for closing both clutch units (18, 19) to select the auxiliary mode.

8. Motor vehicle drive train device according to at least claim 4,
**characterised in that**
the open- and/or closed-loop control unit (20) is provided for selecting the auxiliary mode as a function of a slip of the main drive axle (11).

9. Motor vehicle drive train device according to at least claim 4,
**characterised in that**
the open- and/or closed-loop control unit (20) is provided for selecting the standby mode or the auxiliary mode below a defined limit speed.

10. Motor vehicle drive train device according to at least claims 3 and 4,
**characterised in that**
the open- and/or closed-loop control unit (20) is provided for opening both clutch units (18, 19) to select the normal mode.

11. Motor vehicle drive train device according to at least claim 4,
**characterised in that**
the open- and/or closed-loop control unit (20) is provided for selecting the normal mode above the limit speed.

12. Motor vehicle drive train device according to at least claims 3 and 4,
**characterised in that**
at least one of the two clutch units (18, 19) is load-disconnectable.

13. Method for a motor vehicle drive train device, in particular for a motor vehicle drive train device according to any of the preceding claims, which comprises at least one main drive train (10) driving a main drive axle (11) and at least one auxiliary drive train (12) driven via the main drive train (10) and driving a secondary drive axle (13), the secondary drive axle (13) being joined to the auxiliary drive train (12) without a transverse differential,
**characterised in that**
the auxiliary drive train (12) is joined to the main drive train (10) via a multi-plate clutch (29) and the secondary drive axle (13) comprises a first and a second dog clutch (18, 19) for adopting a differential functionality, wherein one of the two clutch units (18) is opened and one of the two dog clutches (19) is closed to select a standby mode, wherein an auxiliary mode is selected by closing both dog clutches (18, 19) and closing the multi-plate clutch (29).

14. Method according to claim 13,
**characterised in that**
a first clutch unit (18) and a second clutch unit (19) individually connect two wheel drive shafts (15, 16) to an auxiliary drive shaft (17).

## Revendications

1. Dispositif de train de roulement de véhicule automobile comprenant au moins un train de roulement principal (10) destiné à entraîner un arbre de commande principal (11), au moins un train de roulement auxiliaire (12) entraîné par l'intermédiaire du train de roulement principal (10) et un arbre de commande secondaire (13) pouvant être entraîné par le train de roulement auxiliaire (12), l'arbre de commande auxiliaire (13) étant relié sans différentielle transversale au train de roulement auxiliaire (12), **caractérisé en ce que** le train de roulement auxiliaire (12) est relié au train de roulement principal (10) par l'intermédiaire d'un embrayage à disques multiples (29) et l'arbre de commande auxiliaire (29) présente un premier et un second accouplement à griffes (18, 19) pour appliquer une fonctionnalité différentielle.

2. Dispositif de train de roulement de véhicule automobile selon la revendication 1, **caractérisé par** une transmission de conversion (14) prévue pour relier deux arbres d'entraînement de roue (15, 16) à la même vitesse de rotation à un arbre de commande auxiliaire (17).

3. Dispositif de train de roulement de véhicule automobile selon la revendication 2, **caractérisé en ce que** l'arbre de commande auxiliaire (13) présente une première unité d'accouplement (18) et une seconde unité d'accouplement (19) qui sont prévue pour relier les deux arbres de commande de roue (15, 16) respectivement à l'arbre de commande auxiliaire (17).

4. Dispositif de train de roulement de véhicule automobile selon l'une quelconque des revendications précédentes, **caractérisé par** une unité de réglage et/ou de commande (20) sert à commuter un mode de fonctionnement normal, un mode de fonctionnement de secours et un mode de fonctionnement secondaire.

5. Dispositif de train de roulement de véhicule automobile selon les revendications 3 et 4, **caractérisé en ce que** l'unité de réglage et/ou de commande (20) sert à ouvrir l'une des deux unités d'accouplement (18, 19) pour commuter le mode de fonctionnement de secours.

6. Dispositif de train de roulement de véhicule automobile selon les revendications 3 et 4, **caractérisé en ce que** l'unité de réglage et/ou de commande (20) sert à fermer l'une des deux unités d'accouplement (18, 19) pour commuter le mode de fonctionnement de secours.

7. Dispositif de train de roulement de véhicule automobile selon les revendications 3 et 4, **caractérisé en ce que** l'unité de réglage et/ou de commande (20) sert à fermer les deux unités d'accouplement (18, 19) pour commuter le mode de fonctionnement auxiliaire.

8. Dispositif de train de roulement de véhicule automobile selon la revendication 4, **caractérisé en ce que** l'unité de réglage et/ou de commande (20) sert à commuter le mode de fonctionnement auxiliaire en fonction d'un glissement de l'arbre de commande principal (11).

9. Dispositif de train de roulement de véhicule automobile selon au moins la revendication 4, **caractérisé en ce que** l'unité de réglage et/ou de commande (20) sert à commuter le mode de fonctionnement de secours ou le mode de fonctionnement auxiliaire en dessous une vitesse limite définie.

10. Dispositif de train de roulement de véhicule automobile selon les revendications 3 et 4, **caractérisé en ce que** l'unité de réglage et/ou de commande (20) sert à ouvrir les deux unités d'accouplement (18, 19) pour commuter le mode de fonctionnement normal.

11. Dispositif de train de roulement de véhicule automobile selon au moins la revendication 4, **caractérisé en ce que** l'unité de commande et/ou de réglage (20) est prévue pour commuter le mode de fonctionnement normal au dessus de la vitesse limite.

12. Dispositif de train de roulement de véhicule automobile selon les revendications 3 et 4, **caractérisé en ce que** au moins l'une des deux unités d'accouplement (18, 19) peut être débrayée en charge.

13. Procédé pour un dispositif de train de roulement de véhicule automobile, en particulier pour un dispositif de train de roulement de véhicule automobile selon l'une quelconque des revendications précédentes, comprenant au moins un train de roulement principal (10), qui entraîne un arbre de commande principal (11) comprenant au moins un train de roulement auxiliaire (12) entraîné par l'intermédiaire du train de roulement principal (10), qui entraîne un arbre de commande auxiliaire (13), l'arbre de commande auxiliaire (13) étant entraîné sans différentielle transversale par le train de roulement auxiliaire, **caractérisé en ce que** le train de roulement auxiliaire (12) est relié par l'intermédiaire d'un embrayage à disques (29) au train de roulement principal (10) et l'arbre de commande auxiliaire (13) présente un premier et un second accouplement à griffes (18, 19) pour l'application d'une fonctionnalité différentielle, l'une des unités d'accouplement (18) s'ouvrant et l'un des accouplements à griffes (19) se fermant pour commuter un mode de fonctionnement de secours, un mode de fonctionnement auxiliaire étant commuté par la fermeture des deux accouplements à griffes (18,19- et de l'embrayage à disques (29).

14. Procédé selon la revendication 13, **caractérisé en ce qu'**une première unité d'accouplement (18) et une seconde unité d'accouplement (19) relient deux arbres de commande de roue (15, 16) respectivement à un arbre de commande auxiliaire (17).
